# NEUE EUROPÄISCHE PATENTSCHRIFT

(11) **EP 0 755 900 B2**
(45) Veröffentlichungstag und Bekanntmachung des Hinweises auf die Entscheidung über den Einspruch: **16.04.2003**
(45) Hinweis auf die Patenterteilung: 08.12.1999
(21) Anmeldenummer: 96110345.4
(22) Anmeldetag: 27.06.1996
(51) Int. Cl.: C03B 19/14, C03B 37/014, F23D 14/58, F23D 14/32, F23D 14/22

(54) **Vorrichtung zur Herstellung eines Quarzglasrohlings durch Abscheidung aus der Gasphase**
Apparatus for producing a quartz glass preform by vapour phase deposition
Dispositif pour la fabrication de préformes en verre de silice par déposition en phase vapeur

(30) Priorität: 27.07.1995 DE 19527451
(43) Veröffentlichungstag der Anmeldung: 29.01.1997
(73) Patentinhaber: Heraeus Tenevo AG, 63450 Hanau (DE)
(72) Erfinder: Ruppert, Klaus, Dr., 63477 Maintal (DE); Steinkohl, Anton, 63584 Gründau (DE)
(74) Vertreter: Staudt, Armin, Dipl.-Ing.

(56) Entgegenhaltungen:
- EP-A- 0 146 659
- EP-A- 0 237 183
- FR-A- 2 333 628
- US-A- 5 203 897
- US-A- 5 366 531
- US-A- 5 599 371
- PATENT ABSTRACTS OF JAPAN vol. 4, no. 129 (C-24), 10.September 1980 & JP-A-55 080732 (KOMATSU DENSHI KINZOKU CO., LTD.), 18.Juni 1980,
- PATENT ABSTRACTS OF JAPAN vol. 4, no. 50 (C-7), 16.April 1980 & JP-A-55 023068 (NT&T CORP.), 19.Februar 1980,
- PATENT ABSTRACTS OF JAPAN vol. 5, no. 16 (C-41), 30.Januar 1981 & JP-A-55 144433 (NT&T CORP. ET AL.), 11.November 1980,

## Beschreibung

Die Erfindung betrifft eine Vorrichtung zur Durchführung eines Verfahrens zur Herstellung eines Quarzglasrohlings durch Umse zung eines gasförmigen siliziumhaltigen Glasausgangsmaterials in einer Brenngasflamme zu SiO₂. unter Verwendung eines mehrdüsigen Brennerkopfes, durch den in einem zentralen Bereich das Glasausgangsmaterial und in einem den zentralen Bereich umgebenden äußeren Bereich das Brenngas geleitet wird, wobei das Brenngas vom Glasausgangsmaterial im Bereich des Brennerkopfes bis zur Reaktionszone, durch einen zwischen dem Brenngasstrom und dem Strom des Glasausgangsmaterials vorgesehenen Trenngasstrom getrennt wird, daraus in einer Reaktionszone in der Nähe des Brennerkopfes feine SiO₂-Sootpartikel gebildet und diese auf einem Träger unter Aufbau eines porösen Sootkörpers abgeschieden werden, der anschließend gesintert wird.

Ein derartiges Verfahren ist in der europäischen Patentanmeldung EP-A1 0 237 183 beschrieben. Für die Herstellung einer Quarzglasvorform für optische Fasern mittels Flammenhydrolyse werden aus gasförmigem SiCl₄ unter Einsatz eines mehrdüsigen Brenners SiO₂-Sootpartikel gebildet und diese auf einem Träger unter Aufbau eines porösen Sootkörpers abgeschieden. Dabei wird das SiCl₄ durch eine zentrale, rohrförmige Mitteldüse des Brennerkopfes geleitet. Die Mitteldüse ist von einer ringförmigen Brenngasdüse für die Zufuhr von Brenngasen umgeben, innerhalb der eine Vielzahl kleinerer rohrförmiger Düsen für die Einleitung von Hilfsgasen für die Verbrennung angeordnet sind. Um ein Verstopfen der Mitteldüse zu verhindern, ist zwischen dieser und der Brenngasdüse eine Ringdüse vorgesehen, durch die ein Argon-Gasstrom eingeleitet wird, der die Brenngase von dem gasförmigem SiCl₄ trennt. Der poröse Sootkörper wird anschließend gesintert.

Gemäß einem weiteren, in der europäischen Patentanmeldung EP-A1 0 146 659 beschriebenen Verfahren für die Herstellung eines Quarzglasrohlings, werden auf einem waagerecht orientierten und um seine horizontale Längsachse rotierenden Graphitstab feine SiO₂-Sootpartikel abgeschieden. Die Sootpartikel werden gebildet aus organischen siliziumhaltigen Verbindungen durch Flammenhydrolyse in einer Sauerstoff-Wasserstoff-Flamme. In einem Ausführungsbeispiel wird hierzu die siliziumhaltige organische Verbindung zusammen mit einem Dotiermittel und mit Fluor sowie mit Argon und Sauerstoff der zentralen Düse eines mehrdüsigen Brennerkopfes zugeführt. Die zentrale Mitteldüse ist von mehreren, koaxial zu der Mitteldüse angeordneten Ringdüsen umgeben. Durch die erste Ringdüse wird dem Brennerkopf ein Argon-Sauerstoff-Gasgemisch und durch die zweiten und dritten Düsen die Brenngase Wasserstoff und Sauerstoff zugeführt.

Die SiO₂-Sootpartikel werden in einer vom Brennerkopf beabstandeten Reaktionszone gebildet. Der Beginn der Reaktionszone ist durch den Umschlag von blauer Flammenfarbe in weiße Flammenfarbe leicht zu erkennen. Der Abstand der Reaktionszone von der Brennermündung hängt in erster Linie von den Strömungsgeschwindigkeiten der aus dem Brennerkopf austretenden Gase und von der Flammentemperatur ab. Bei zu geringem Abstand schlagen sich SiO₂-Sootpartikel auf dem Brennermund nieder und verstopfen so die Düsenöffnungen. Andererseits ist für eine möglichst vollständige Umsetzung des Glasausgangsmaterials eine bestimmte Mindestdauer der Umsetzung und damit eine bestimmte Mindestlänge der Reaktionszone erforderlich. Das bedeutet, daß der Beginn der Reaktionszone auch in einem ausreichend großen Abstand von der Oberfläche des sich bildenden Sootkörpers liegen muß. Die Effizienz der Abscheidung ist optimal, wenn die Länge der Reaktionszone so gewählt ist, daß die Umsetzung des Glasausgangsmaterials in der Nähe der Oberfläche des Sootkörpers vollständig erfolgt ist.

Üblicherweise wird der Abstand des Brennerkopfes von der Oberfläche des sich bildenden Sootkörpers konstant gehalten und der Brennerkopf mit zunehmendem Durchmesser des Sootkörpers entsprechend wegbewegt.

Mit zunehmender Oberfläche des Sootkörpers nimmt die Wärmeabstrahlung und die Wärmeabfuhr durch Konvektion zu. Der großvolumige Sootkörper kühlt dadurch im Vergleich zum kleinvolumigen Sootkörper relativ schnell aus. Infolgedessen nimmt die Dichte des Sootkörpers in radialer Richtung von innen nach außen ab. Diese kann sich auf die Eignung des Sootkörpers für die Herstellung optischer Bauteile, wie beispielsweise optischer Fasern für die Nachrichtentechnik nachteilig auswirken. Durch eine Verringerung des Brennerabstandes zur Sootkörperoberfläche könnte zwar die Temperaturabsenkung verhindert werden; jedoch würde dadurch die Effizienz der Abscheidung aus den oben dargelegten Gründen verringert.

Der vorliegenden Erfindung liegt daher die Aufgabe zugrunde, eine Vorrichtung anzugeben, mit der eine gleichbleibend hohe Effizienz der Abscheidung erreicht werden kann.

Die Erfindung betrifft eine Vorrichtung zur Durchführung des Verfahrens, mit einem Brennerkopf, der eine zentrale, rohrförmige Mitteldüse für die Zufuhr von Glasausgangsmaterial und mehrere, koaxial zur Mitteldüse angeordnete Ringdüsen für die Zufuhr von Brenngasen aufweist, wobei zwischen der Mitteldüse und den Ringdüsen eine ringförmige Trenngasdüse vorgesehen ist, die eine innere und eine äußere, im radialen Querschnitt kreisförmige Begrenzungswand aufweist.

Eine derartige Vorrichtung ist ebenfalls aus der EP-A1 0 146 659 bekannt. Der bekannte Brenner besteht aus Quarzglas. Er weist eine rohrförmige Mitteldüse für die Zufuhr von Glasausgangsmaterial und drei koaxial zur Mitteldüse angeordnete Ringdüsen auf, wovon die beiden äußeren Ringdüsen für die Zufuhr von Sauerstoff und die Zufuhr von Wasserstoff für die Brennergasflamme vorgesehen sind. Zwischen den ringförmigen Brenngasdüsen und der Mitteldüse ist eine weitere ringförmige Düse vorgesehen, die zur Zufuhr eines Sauerstoff-Argon-Gemisches dient.

Bei dem aus der oben genannten europäischen Patentanmeldung EP-A1 0 237 183 bekannten, mehrdüsigen Abscheidebrenner ist für die Zufuhr von SiCl₄ eine zentrale, rohrförmige Mitteldüse vorgesehen, die von einer ringförmigen Brenngasdüse für die Zufuhr von Brenngasen umgeben ist, innerhalb der eine Vielzahl kleinerer rohrförmiger Düsen für die Einleitung von Hilfsgasen für die Verbrennung angeordnet sind. Zwischen der Mitteldüse der Brenngasdüse kann eine weitere Ringdüse vorgesehen sein, durch die ein Argon-Gasstrom eingeleitet wird, der die Brenngase von dem gasförmigem SiCl₄ trennt. Die Ringdüse verläuft konzentrisch zur Mitteldüse.

Bei optimaler Einstellung der Gasströme bei den beiden oben erläuterten, bekannten Brennern sind hohe Abscheideraten erzielbar. Es hat sich aber gezeigt, daß die Brenner auf Änderungen der Strömungsbedingungen empfindlich reagieren und in diesen Fällen die Abscheiderate sinkt.

Der Erfindung liegt weiterhin die Aufgabe zugrunde, eine Vorrichtung zur Herstellung eines Quarzglasrohlings durch Umsetzung eines gasförmigen siliziumhaltigen Glasausgangsmaterials anzugeben, die bei einem relativ unempfindlich reagieren auf Änderungen der Verfahrensparameter einen hohen Umsetzungsgrad gewährleistet.

Von den Erfindern wurden umfangreiche Versuche mit dem Ziel durchgeführt, einen gewünschten radialen Dichteverlauf des Sootkörpers, üblicherweise ist dies ein homogener Dichteverlauf über die Wandstärke des Sootkörpers zu erreichen. Hierzu wurde zunächst, wie eingangs bereits erläutert, versucht, die relative Abkühlung des größer werdenden Sootkörpers dadurch zu kompensieren, daß der Brenner bzw. die Brenner näher an die Oberfläche des Sootkörpers herangeführt wurden. Es stellte sich aber heraus, daß hierdurch die Reaktionszone verkürzt, die vollständige Oxidation des gasförmigen Glasausgangsmaterials verhindert und der Umsetzungsgrad und die Abscheiderate dadurch verringert wurden.

Zu der Funktion des Trenngasstromes, die Länge und Lage der Reaktionszone zu stabilisieren, gehört es, eine frühzeitige Umsetzung des Glasausgangsmaterials mit den Brenngasen im Bereich des Brennerkopfes zu verhindern und diese Umsetzung in den. Bereich der Reaktionszone zu verlagern. Die Strömungsgeschwindigkeit des Trenngasstromes ist daher so zu wählen, daß dieser den Strom der Glasausgangsmaterialien in der Nähe der Brennerkopfes vollständig von den Brenngasen abschirmt. Dadurch ist es möglich, den Brenngas-Strom oder die Brenngas-Ströme zu variieren, ohne daß der Strom des Glasausgangsmaterials davon merklich beeinflußt wird. Damit der Trenngasstrom auf diese Weise wirkt, ist seine Strömungsgeschwindigkeit genügend groß einzustellen. Die erforderliche Strömungsgeschwindigkeit hängt von den übrigen Gasströmen ab, kann aber anhand weniger Versuche vom Fachmann leicht ermittelt werden. Als Anhaltspunkt für eine ausreichend hohe Strömungsgeschwindigkeit dient der Abstand der Reaktionszone vom Brennermund. Dieser sollte mindestens 3 mm, günstiger sind mindestens 5 mm, betragen, damit eine frühzeitige Durchmischung des Trenngasstromes mit den Brenngasen vermieden wird. Der Trenngasstrom kann dabei aus einer oder aus mehreren Brenner-Düsen bereitgestellt werden.

Die oben genannten Aufgaben werden, ausgehend von der eingangs beschriebenen Vorrichtung, erfindungsgemäß dadurch gelöst, daß mindestens die äußere Begrenzungswand in einem Bereich von unterhalb der Düsenöffnung bis zur Düsenöffnung schräg in Richtung auf die Mitteldüse verläuft, und daß mindestens eine Brenngasdüse als Diffusor ausgebildet ist.

Dadurch, daß der Brenngasstrom aus mindestens einer Brenngasdüse turbulent austritt, wird ein laminarer oder nur wenig turbulenter Trenngasstrom kaum beeinflußt und sogar stabilisiert. Diese Wirkung wird noch verstärkt, indem der Trenngasstrom innerhalb des Brennerkopfes in Richtung auf die Reaktionszone fokussiert wird. Die Fokussierung wird durch eine geeignete Gasführung des Trenngasstromes im Bereich des Brennermundes erreicht . Beispielsweise können die Düsen-Begrenzungswände nach innen geneigt sein und/oder sie können sich nach außen konisch verjüngen. Durch die Fokussierung des Trenngasstromes wird eine stabile Gasführung erreicht und eine frühzeitige Vermischung des Trenngasstromes mit den Brenngasen und damit eine Umsetzung des Glasausgangsmaterials mit den Brenngasen, insbesondere mit Wasserstoff und Sauerstoff im Bereich des Brennerkopfes verhindert. Die Fokussierung trägt auch zur Stabilisierung der Gasströmungen insgesamt bei und erleichtert so die Aufrechterhaltung von Lage und Länge der Reaktionszone. Dadurch wird auch die Energie des Brenngasstromes gebündelt und ein seitliches Abstrahlen der Reaktionswärme vermindert.

Die Erfindung ermöglicht es somit erstmals, in einem ersten Verfahrensschritt für die jeweiligen Glasausgangsmaterialien, Brenngase und Gasströme die optimale Länge der Reaktionszone zu ermitteln und in einem zweiten Verfahrensschritt, beispielsweise durch Variation während der Soot-Abscheidung, die Brenngase so einzustellen, daß die gewünschte Temperatur auf der Sootkörper-Oberfläche und damit der gewünschte radiale Dichteverlauf innerhalb des Sootkörpers erzielt wird.

Unter dem Ausdruck "Reaktionszone" wird dabei derjenige Bereich zwischen dem Brennerkopf und der Oberfläche des Sootkörpers verstanden, in dem eine Oxidation des gasförmigen Glasausgangsmaterials stattfindet und dessen Beginn durch den Farbumschlag der Brenner-Flamme von blau auf weiß gekennzeichnet ist. Je nach Abscheideverfahren handelt es bei der "Oberffäche des Sootkörpers" um die Mantelfläche eines Zylinders (OVD-Verfahren) oder um die Stirnfläche eines Zylinders (VAD-Verfahren).

Die Brenngase stellen die Energie für die Umsetzung des gasförmigen Glasausgangsmaterials in SiO₂-Spolpartikel zur Verfügung. Üblicherweise handelt es sich bei den Brenngasen um Wasserstoff und Sauerstoff, die durch zwei räumlich voneinander getrennte Düsen der Reaktionszone zuführt werden.

Besonders bewährt hat sich ein Verfahren, bei dem der Brenngasstrom während des Sootkörper-Aufbaus fortlaufend erhöht wird. Durch die fortlaufende Erhöhung des Brenngasstromes kann der relative Temperaturabfall des Sootkörpers mit zunehmender Dicke ausgeglichen werden, so daß, falls gewünscht, ein homogener radialer Dichteverlauf innerhalb des Sootkörpers eingestellt werden kann. Dabei gewährleistet das erfindüngsgemäße Verfahren, daß die Effektivität der Abscheidung der Sootpartikel nicht verringert wird.

Als Glasausgangsmaterial hat sich SiCl₄ als besonders geeignet erwiesen. Vorteilhafterweise wird dem Glasausgangsmaterial als Tragergas Sauerstoff beigemischt. Die Beimischung des Trägergases hat den Vorteil, daß Änderungen des SiCl₄-Anteils im Gasstrom durch eine entsprechende Änderung des Trägergas-Anteils kompensiert werden können und die Strömungsbeschwindigkeit des Gasstromes daher insgesamt konstant gehalten werden kann. Der Sauerstoff reagiert in der Reaktionszone mit dem Glasausgangsmaterial unter Bildung von SiO₂. Es hat sich eine Verfahrensweise bewährt, bei der das Glasausgangsmaterial aus dem Brennerkopf durch eine zentrale rohrförmige Mitteldüse und das Trenngas durch eine konzentrisch zur Mitteldüse angeordnete Ringdüse austritt. Bei dieser Verfahrensweise umschließt der Trenngasstrom den Strom des Glasausgangsmaterials vollständig und gewährleistet eine vollständige Trennung vom Brenngasstrom im Bereich des Brennerkopfes.

Es hat sich als vorteilhaft erwiesen, während des Sootkörper-Aufbaus den Strom des Glasausgangsmaterials konstant zu halten. Dies erleichtert das Einhalten einer konstanten Abscheiderate und eines homogenen Dichteverlaufes.

Dazu trägt auch bei, während des Sootkörper-Aufbaus den Trenngasstrom, den Abstand des Brennerkopfes von der Oberfläche des sich bildenden Spptkörpers und den Abstand der Reaktionszone von der Oberfläche des sich bildenden Sootkörpers konstant zu halten.

Als besonders vorteilhaft hat sich erwiesen, den Beginn der Reaktionszone vom Brennerkopf auf einen Wert im Bereich von 5 mm bis 10 mm einzustellen. Der Mindestabstand von 5 mm verhindert die Abscheidung von Sootkörper-Partikeln auf den Brennerkopf. Bei einem Abstand von mehr als 10 mm wird die Reaktionszone unnötig verkürzt.

Die Trenngasdüse wird für die Zufuhr eines Trenngases verwendet, der den Strom der Glasausgangsmaterialien von dem Brenngas-Strom trennt, und zwar unabhängig von der Strömungsgeschwindigkeit des Brenngas-Stromes. Dadurch, daß die Trenngasdüse in einem Bereich von unterhalb der Düsenöffnung bis zur Düsenöffnung schräg in Richtung auf die Mitteldüse verläuft, wird eine Fokussierung und Stabilisierung der Gasströmung des Trenngases erreicht und damit die Abschirmung des Stromes der Glasausgangsmaterialien von den Brenngasen erleichtert. Die Gasführung des Trenngasstromes stabilisiert die Gasströmung im Bereich des Brennerkopfes insgesamt, was sich insbesondere bei sehr hohen und sehr niedrigen Brenngasströmen bemerkbar macht. Dadurch ist die Abscheidung der Sootpartikel leichter kontrollierbar und der gewünschte Dichteverlauf einfacher einstellbar.

Der Trenngasstrom wird stabilisiert, indem mindestens eine Brenngasdüse als Diffusor ausgebildet ist. Der Diffusor kann auf den in der Strömungstechnik dafür allgemein bekannten Bauprinzipien beruhen. Wesentlich ist, daß dadurch eine turbulente Brenngasströmung erzeugt wird, die den Trenngasstrom nicht oder wenig beeinflußt.

Besonders bewährt hat sich eine Vorrichtung, bei der sich die Trenngasdüse in einem Bereich von unterhalb der Düsenöffnung bis zur Düsenöffnung hin konisch verjüngt. Die konische Verjüngung der Trenngasdüse im Bereich der Düsenöffnung bewirkt eine Fokussierung des Trenngasstromes im Bereich der Reaktionszone, wie sie oben anhand der Beschreibung des Verfahrens bereits erläutert worden ist.

Besonders bewährt hat sich eine Ausführungsform der Vorrichtung, bei der eine innere ringförmige Brenngasdüse vorgesehen ist, deren Öffnungsquerschnitt sich in einem Bereich von unterhalb der Düsenöffnung bis zur Düsenöffnung hin erweitert. Durch diese Erweiterung wirkt die Düse als Diffusor, so daß der Turbulenzgrad des aus der Brenngasdüse austretenden Brenngasstromes im Bereich der Düsenöffnung stark zunimmt. Dadurch ist gewährleistet, daß der im Brennerkopf weiter innen austretende Trenngasstrom wenig beeinflußt wird.

Bei einer bevorzugten Ausführungsform der Vorrichtung ist eine äußere ringförmige Brenngasdüse vorgesehen, die eine innere und eine äußere Begrenzungswand aufweist, wobei die äußere Begrenzungswand von der Düsenöffnung aus über die innere Begrenzungswand hinaus verlängert ist. Die Verlängerung der äußeren Begrenzungswand dient ebenfalls der Verbesserung der Qasführung. Sie verhindert eine frühzeitige Verbreiterung und Defokussierung der Gasströme, insbesondere der Brenngasströme. Es wird ein Bündelung der Energie der Brenngase erreicht und das seitliche Abstrahlen der Reaktionswärme verringert. Dies erhöht die Effektivität der Abscheidung.

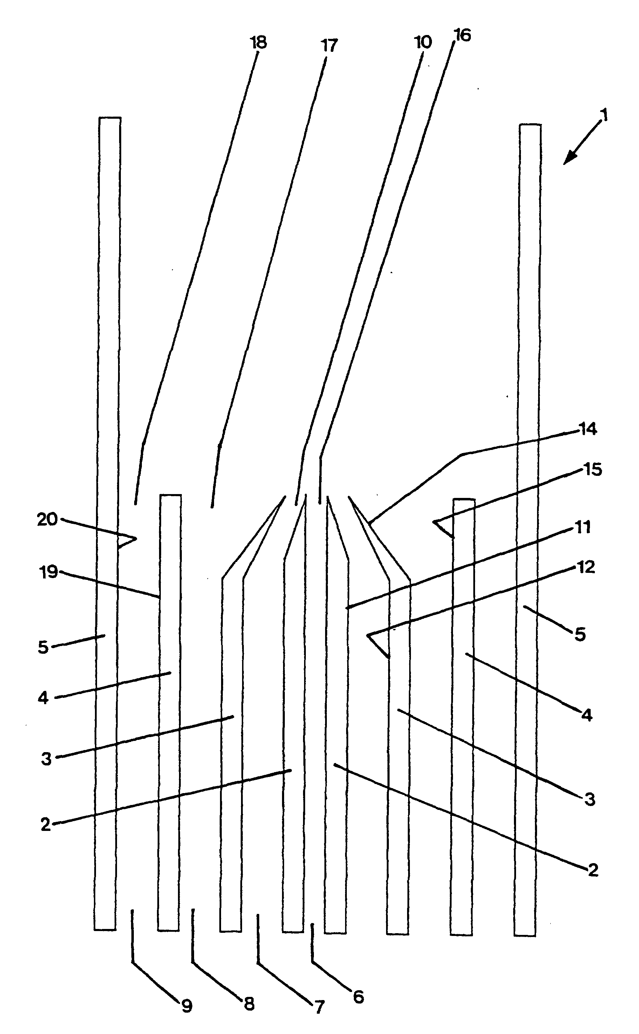

Ein Ausführungsbeispiel der Erfindung ist in der Zeichnung dargestellt und wird nachfolgend näher erläutert.

Die einzige Figur zeigt den Brennermund eines erfindungsgemäßen Brenners in einem Längsschnitt.

Der Brennermund, dem insgesamt die Bezugsziffer 1 zugeordnet ist, besteht aus insgesamt 4 koaxial zueinander angeordneten Brennerrohren 2, 3, 4, 5 aus Quarzglas. Das zentrale Brennerrohr 2 umschließt die Mitteldüse 6, zwischen dem zentralen Brennerrohr 2 und dem benachbarten Brennerrohr 3 ist die Trenngasdüse 7 ausgebildet, das Brennerrohr 3 und das Brennerrohr 4 umschließen die Ringdüse 8 und das Brennerrohr 4 und das Außenrohr 5 die Außendüse 9.

Im Bereich der Düsenöffnung 10 knickt die ringförmige Trenngasdüse 7 in Richtung auf die Mitteldüse 6 ab. Gleichzeitig verjüngt sich der Öffnungsquerschnitt der Düse in diesem Bereich kontinuierlich. Dies wird dadurch erreicht, daß sowohl die innere Begrenzungswand 11 als auch die äußere Begrenzungswand 12 der Trenngasdüse 7 in dem Bereich der Düsenöffnung 10 in einem stumpfen Winkel in Richtung auf die Mitteldüse 6 abknicken, wobei dieser Winkel bei der äußeren Begrenzungswand 12 steiler ausgebildet ist als bei der inneren Begrenzungswand 11.

Der Öffnungsquerschnitt der Ringdüse 8 erweitert sich im Bereich der Düsenöffnung 17. Dies wird dadurch erreicht, daß im Bereich der Düsenöffnung 17 die innere Begrenzungswand 14 schräg in Richtung auf die Mitteldüse 6 verläuft und sich dabei von der äußeren Begrenzungswand 15, in Richtung auf die Düsenöffnung 13 gesehen, kontinuierlich entfernt.

Das Außenrohr 5 ist über den Bereich der Düsenöffnungen 10, 16, 17 und 18 hinaus verlängert. In der Figur ist der inneren Begrenzungswand der Düse 9 die Bezugsziffer 19 und der äußeren Begrenzungswand der Düse 9 die Bezugsziffer 20 zugeordnet.

Im dargestellten Ausführungsbeispiel stehen die maximalen Offnungsquerschnitte der Mitteldüse 6, der Trenngasdüse 7, der Ringdüse 8 und der Außendüse 9 in der Reihenfolge ihrer Nennung im Verhältnis von 1:1,5:30:2 zueinander.

Nachfolgend wird die erfindungsgemäße Vorrichtung anhand des in der Figur dargestellten Ausführungsbeispiels näher erläutert.

Durch die Mitteldüse 6 werden SiCl₄, und Sauerstoff, durch die Trenngasdüse 7 Sauerstoff, durch die Ringdüse 8 Wasserstoff und durch die Außendüse 9 Sauerstoff geleitet, wobei die genannten Gaströme in der Reihenfolge ihrer Nennung in einem Mengenverhältnis von 0,7:0,7:10:3 zueinander stehen.

Der durch die Trenngasdüse 7 geleitete Sauerstoff-Trenngasstrom ist gerade so bemessen, daß eine Abscheidung von SiO₂ an den Düsenöffnungen 10 bzw. 16 verhindert wird. Er ist hierzu auf den aus der Mitteldüse 6 austretenden Si-haltigen Gasstrom so abgestimmt, daß die Umsetzung von SiCl₄ zu SiO₂ etwa 7 mm von den Düsenöffnungen 10 bzw. 16 entfernt einsetzt. Dort liegt der Beginn der Reaktionszone, die sich bis zur Abscheidefläche auf einem Träger (in der Figur nicht dargestellt) fortsetzt. Durch diese Gasführung ist gewährleistet, daß die Umsetzung von SiCl₄ zu SiO₂ möglichst kurz nach dem Austreten der Gase aus den Düsenöffnungen 10 bzw. 16 beginnt und die Reaktionszone dadurch möglichst lang ist.

Hierzu trägt die besondere Gasführung durch den konischen Auslauf der Düsenöffnung 10 der Trenngasdüse 7 bei. Dadurch wird eine Fokussierung des Trenngas-Stromes und eine besondere wirksame Abschirmung der aus den Düsenöffnungen 17 und 18 austretenden Brenngasströme von dem Si-haltigen Gasstrom erreicht. Die Abschirmung wird weiterhin durch die Erweiterung der Ringdüse 8 im Bereich der Düsenöffnung 17 verbessert. Dieser Bereich wirkt strömungstechnisch als sogenannter "Diffusor". Das bedeutet, daß der durch die Ringdüse 8 eingeleitete Wasserstoff-Gasstrom im oberen Bereich 17 der Ringdüse 8 turbulent wird und dadurch den fokussierten Trenngas-Strom und somit die Abschirmung kaum beeinträchtigt.

Zur Abschirmung des Brennergas-Stromes trägt weiterhin die Ausbildung der Außendüse 9 bei. Auch der durch die Außendüse 9 eingeleitete Sauerstotf-Gasstrom wird im Bereich der Düsenöffnung 18 turbulent. Dabei vermischt er sich ideal mit dem aus der Ringdüse 8 austretenden Wasserstoff-Gasstrom, wobei er jedoch den fokussierten, durch die Trenngasdüse 7 geleiteten Trenngas-Strom nicht zu beeinträchtigen vermag. Aufgrund dieser Gasführung wird eine optimale Abschirmung des durch die Mitteldüse 6 eingeleiteten Glasausgangsmaterials von den durch die Ringdüse 8 und die Außendüse 9 eingeleiteten Brenngasen gewährleistet. Dies erlaubt eine Variation der Brenngase in einem gewissen Rahmen, ohne dadurch den Strom des Glasausgangsmaterials zu verändern bzw. den Beginn und die Lage der Reaktionszone zu verschieben. Dadurch ist es möglich, den Brenngas-Strom im Verlaufe der Sootabscheidung auf einen Tragerkörper beispielsweise so zu variieren, daß die durch ihn erzeugte Temperatur kontinuierlich zunimmt und dadurch die Dichte des sich bei der Abscheidung aufbauenden Sootkörpers variiert und - im Normalfall - konstant gehalten werden kann.

## Patentansprüche

1. Vorrichtung zur Herstellung eines Quarzglasrohlings mit einem Brennerkopf, der eine zentrale, rohrförmige Mitteldüse für die Zufuhr von Glasausgangsmaterial und mehrere, koaxial zur Mitteldüse angeordnete Ringdüsen für die Zufuhr von Brenngasen aufweist, wobei zwischen der Mitteldüse und den Ringdüsen eine ringförmige Trenngasdüse vorgesehen ist, die eine innere und eine äußere, im radialen Querschnitt kreisförmige Begrenzungswand aufweist, **dadurch gekennzeichnet, daß** mindestens die äußere Begrenzungswand (12) in einem Bereich von unterhalb der Düsenöffnung (10) bis zur Düsenöffnung (10) schräg in Richtung auf die Mitteldüse (6) verläuft, und daß mindestens eine Brenngasdüse (8) als Diffusor ausgebildet ist.

2. Vorrichtung nach Anspruch 1, **dadurch gekennzeichnet, daß** die Trenngasdüse (7) sich in einem Bereich von unterhalb der Düsenöffnung (10) bis zur Düsenöffnung (10) hin konisch verjüngt.

3. Vorrichtung nach Anspruch 1 oder 2, **dadurch gekennzeichnet, daß** eine innere ringförmige Brenngasdüse (8) vorgesehen ist, deren Öffnungsquerschnitt sich in einem Bereich von unterhalb der Düsenöffnung (17) bis zur Düsenöffnung (17) hin erweitert.

4. Vorrichtung nach einem der Ansprüche 1 bis 3, **dadurch gekennzeichnet, daß** eine äußere ringförmige Brenngasdüse (9) vorgesehen ist, die eine innere Begrenzungswand (19) und eine äußere Begrenzungswand (20) aufweist, wobei die äußere Begrenzungswand (20) von der Düsenöffnung (18) aus über die innere Begrenzungswand (19) hinaus verlängert ist.

## Claims

1. A device to carry out the method according to any one of the preceding claims, with a burner head which has a central tubular middle nozzle for the supply of glass starting material and several ring nozzles arranged coaxially to the middle nozzle for the supply of combustible gases, an annular separation gas nozzle being provided between the middle nozzle and the ring nozzles, which separation gas nozzle has an inner and an outer boundary wall which is circular in radial cross-section, **characterized in that** at least the outer boundary wall (12) in a region from beneath the nozzle opening (10) up to the nozzle opening (10) runs obliquely in the direction of the middle nozzle (6), and that at least one combustible gas nozzle (8) is constructed as a diffusor.

2. The device according to claim 1, **characterised in that** the separation **in that** the separation gas nozzle (7) narrows conically in a region from beneath the nozzle opening (10) up to the nozzle opening (10).

3. The device according to claim 1 or 2, **characterised in that** an inner annular combustible gas nozzle (8) is provided, the opening cross-section of which widens in a region from beneath the nozzle opening (17) up to the nozzle opening (17).

4. The device to according to any one of claims 1 to 3, **characterised in that** an outer annular combustible gas nozzle (9), is provided, which has an inner boundary wall (19) and an outer boundary wall (20), the outer boundary wall (20) being extended from the nozzle opening (18) beyond the inner boundary wall (19).

## Revendications

1. Dispositif pour la mise en oeuvre du procédé selon l'une des revendications précédentes, comprenant une tête de brûleur qui présente une buse médiane centrale tubulaire pour l'amenée du matériau initial de verre et plusieurs buses annulaires disposées coaxialement à la buse médiane pour l'amenée de gaz combustibles, entre la buse médiane et les buses annulaires une buse de gaz séparateur annulaire étant prévue, qui présente des parois interne et externe de délimitation dont la section transversale radiale est de forme circulaire, **caractérisé en ce qu'**au moins la paroi de délimitation externe (12) s'étend en biais en direction de la buse médiane (6) dans une zone partant en aval de l'ouverture de buse (10) jusqu'à l'ouverture de buse (10) et **en ce qu'**au moins une buse de gaz combustible (8) est conçue comme un diffuseur.

2. Dispositif selon la revendication 1, **caractérisé en ce que** la buse de gaz séparateur (7) se termine en forme de cône dans une zone partant en aval de l'ouverture de buse (10) jusqu'à l'ouverture de buse (10).

3. Dispositif selon la revendication 1 ou 2, **caractérisé en ce qu'**une buse de gaz combustible interne annulaire (8) est prévue dont la section transversale d'ouverture s'élargit dans une zone en aval de l'ouverture de buse (17) jusqu'à l'ouverture de buse (17).

4. Dispositif selon l'une des revendications 1 à 3, **caractérisé en ce qu'**il est prévu une buse de gaz combustible externe annulaire (9) qui présente une paroi interne de délimitation (19) et une paroi externe de délimitation (20), la paroi externe de délimitation (20) se prolongeant depuis l'ouverture de buse (18) au delà de la paroi interne de délimitation (19).
